# DEMANDE DE BREVET EUROPEEN

(11) **EP 3 709 234 A1**
(43) Date de publication de la demande: **16.09.2020**
(21) Numéro de dépôt: 19305314.7
(22) Date de dépôt: 15.03.2019
(51) Int. Cl.: G06Q 10/06, G06Q 10/02

(54) **SYSTÈME ET PROCÉDÉ POUR LA GESTION OPTIMISÉE DU FONCTIONNEMENT ET DE LA MAINTENANCE DE DISPOSITIFS URBAINS**

(71) Demandeur: Alcom Technologies, 10600 Barberey St Sulpice (FR)
(72) Inventeur: GAUTIER, Fabrice, 33000 BORDEAUX (FR)
(74) Mandataire: Ipside

(57) **Abrégé**

Système de gestion (100) du fonctionnement et de la maintenance d'une pluralité de dispositifs électroniques (200, 201, 202, 203) installés dans un espace public, tels que des panneaux publicitaires déroulants, comprenant une interface de communication (10), apte à recevoir des données issues des dispositifs électroniques, un serveur de base de données (20), une unité centrale de traitement et de calcul (40) et une interface utilisateur (60), le système de gestion implémente une intelligence artificielle (50) opérant une analyse prédictive sur les données issues desdits dispositifs électroniques et organisant des résultats de ladite analyse pour leur affichage via l'interface utilisateur.

L'invention porte également sur un procédé pour la gestion du fonctionnement et la maintenance prédictive d'un panneau publicitaire déroulant, mettant en ouvre ce système de gestion.

## Description

### DOMAINE TECHNIQUE

La présente invention appartient au domaine des systèmes informatiques dits intelligents et communicants, notamment des systèmes interactifs exploitant des données d'autres systèmes pour par exemple contrôler et commander ces derniers ou permettre une aide à la décision. L'invention concerne plus particulièrement un système et un procédé pour la gestion optimisée du fonctionnement et de la maintenance de dispositifs urbains tels que les panneaux d'affichage déroulants.

La présente invention est étroitement liée aux technologies d'intelligence artificielle, de sécurité par blockchain et, dans une moindre mesure, de réalité augmentée et de big data.

### ÉTAT DE L'ART

Il existe différents objets et dispositifs électroniques installés dans l'espace public ou même privé, lorsqu'il présente une importante répartition géographique et/ou une grande superficie, et assurant certaines fonctions vis-à-vis des usagers telles que la publicité ou l'affichage d'information en général. Parmi ces dispositifs, on s'attardera prioritairement sur les panneaux d'affichage déroulants. Ces panneaux sont généralement installés dans des espaces ouverts, en bord de route par exemple, ou fermés, dans le hall d'un centre commercial par exemple.

De manière générale, un panneau d'affichage déroulant comporte un caisson renfermant au moins une bande porteuse d'affiches, communément appelée train d'affiches, enroulée sur deux rouleaux parallèles associés à des moyens d'entraînement en rotation tels que des moteurs électriques et des réducteurs.

Le caisson présente une ou deux fenêtres vitrées ou simplement transparentes pour permettre la diffusion des informations inscrites sur les affiches et qui défilent au gré du déroulement et de l'enroulement des trains d'affiches.

Le remplacement des affiches ainsi que la maintenance du mécanisme nécessitent que le caisson présente un moyen d'accès. Aussi, la fenêtre vitrée est amovible, et plus généralement, montée pivotante soit selon un axe horizontal, soit selon un axe vertical.

Des dispositifs de panneaux d'affichage déroulants d'une telle conception sont par exemple décrits dans les documents FR2869141, FR2812750 et WO09634378.

En raison de leur mode de fonctionnement, cyclique avec des périodes relativement longues voire en continu, et de leur présence, le plus souvent, à l'extérieur dans un environnement relativement agressif en termes de conditions climatiques, de pollution, de vandalisme, etc., les panneaux d'affichage déroulants connaissent des défaillances et des pannes à répétition, nécessitant à chaque fois une intervention des techniciens.

Pour limiter l'occurrence des pannes critiques qui pourraient occasionner un arrêt prolongé du panneau d'affichage, et par là-même, des pertes financières et/ou des complications contractuelles par rapport aux clients, les sociétés d'exploitation des panneaux d'affichage assurent une maintenance régulière de l'ensemble de leurs panneaux. Cette maintenance est souvent difficile à organiser, surtout lorsqu'elle est réalisée par quelques techniciens sur un ensemble de panneaux couvrant une large zone géographique (prévision du trafic, pièces de rechange, recherche de la panne, ...), et se révèle parfois être sans intérêt notable pour des panneaux fonctionnant de façon nominale sans le moindre problème.

L'organisation de la maintenance des panneaux d'affichage constitue actuellement une problématique qui n'a aucune solution efficace. De plus, il n'existe pas non plus de solutions permettant de contrôler l'intégrité et le fonctionnement des composants d'un panneau d'affichage et d'agir automatiquement sur ledit panneau à distance.

### PRÉSENTATION DE L'INVENTION

La présente invention vise à pallier les inconvénients de l'art antérieur, notamment les limites des indicateurs équipant les dispositifs connus.

À cet effet, la présente invention concerne un système de gestion du fonctionnement et de la maintenance d'une pluralité de dispositifs électroniques installés dans un espace public, comprenant une interface de communication, apte à recevoir des données issues des dispositifs électroniques, un serveur de base de données, une unité centrale de traitement et de calcul et une interface utilisateur. Ce système est remarquable en ce qu'il comporte des moyens de mise en oeuvre d'une intelligence artificielle opérant une analyse prédictive sur les données issues desdits dispositifs électroniques et organisant des résultats de ladite analyse pour leur affichage via l'interface utilisateur.

Avantageusement, le serveur de base de données est sécurisé par une chaine de blocs, ou blockchain, effectuant des certifications du contenu dudit serveur de base de données et générant des certificats correspondants.

Selon un mode de réalisation avantageux, le système de gestion est apte à recevoir des données externes envoyées par un client ou un tiers, directement sur l'unité centrale de traitement et de calcul.

L'interface de communication est apte à communiquer sur un réseau sans-fil de type GSM.

L'interface utilisateur se présente sous forme d'une solution ou d'une combinaison de solutions parmi un portail web, une application installée sur une tablette ou un téléphone mobile, et une interface de réalité augmentée installée sur une tablette ou un téléphone mobile.

Procédé de gestion du fonctionnement et de la maintenance d'une pluralité de dispositifs électroniques installés dans un espace public, mettant en oeuvre un système de gestion tel que décrit, comprenant :
- une étape de réception de données, issues d'au moins un dispositif électronique, par l'interface de communication ;
- une étape de transmission des données reçues à l'unité centrale de traitement et de calcul ;
- une étape de stockage desdites données dans le serveur de base de données ;
- une étape d'analyse desdites données par l'intelligence artificielle ; et
- une étape d'affichage des résultats de ladite analyse sur l'interface utilisateur.

Avantageusement, ce procédé de gestion comprend en outre :
- une étape de décodage de données par l'interface de communication avant leur transmission à l'unité centrale de traitement et de calcul ;
- une étape de traitement de données dans ladite unité centrale avant leur stockage dans le serveur de base de données et leur analyse par l'intelligence artificielle ; et
- une étape de certification du contenu de la base de données par une blockchain.

De façon avantageuse, le procédé comprend en outre une étape d'envoi de consignes de fonctionnement par le système de gestion optimisée à au moins un dispositif électronique.

L'envoi de consignes peut être automatique, lesdites consignes étant déterminées par l'intelligence artificielle et/ou l'unité centrale de traitement et de calcul.

L'envoi de consignes peut être manuel, lesdites consignes étant déterminées par l'utilisateur après consultation des résultats affichées sur l'interface utilisateur.

Avantageusement, au moins un dispositif électronique est un panneau d'affichage déroulant.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un système de gestion et d'un procédé de gestion conformes aux principes de l'invention.

### BRÈVE DESCRIPTION DES FIGURES

Les éléments d'une même figure, ainsi que les figures elles-mêmes, ne sont pas nécessairement à la même échelle. Sur l'ensemble des figures, les éléments identiques ou équivalents portent le même repère numérique.

Il est ainsi illustré en :
- Figure 1 : un schéma synoptique du fonctionnement du système de gestion optimisée selon l'invention ;
- Figure 2 : un schéma bloc des architectures internes du système de gestion optimisée et d'un panneau d'affichage déroulant ;
- Figure 3 : les principales étapes d'un procédé de gestion optimisée et de maintenance prédictive selon l'invention ;
- Figure 4 : un exemple d'interface graphique pour l'affichage d'informations de maintenance selon l'invention ;
- Figure 5: un exemple de visualisation en réalité augmentée selon l'invention ;
- Figure 6 : une vue en perspective d'un panneau d'affichage déroulant de grandes dimensions ;
- Figure 7 : des exemples de panneaux d'affichage déroulants urbains.

### DESCRIPTION DÉTAILLÉE DE MODES DE RÉALISATION

Dans le mode de réalisation décrit ci-après, on fait référence à un système et à un procédé de gestion optimisée destiné principalement aux panneaux d'affichage déroulants. Cet exemple, non limitatif, est donné pour une meilleure compréhension de l'invention et n'exclut pas l'application de l'invention à tous types de panneaux d'affichage électronique et à d'autres dispositifs parmi les équipements urbains et tous les objets électroniques ou électromécaniques installés dans l'espace public tels que les systèmes de signalisation, les distributeurs autonomes, les bornes automatiques de péages, etc.

Dans la suite de la description, l'expression « panneau déroulant » est employée pour désigner tout panneau d'affichage déroulant pour la publicité urbaine.

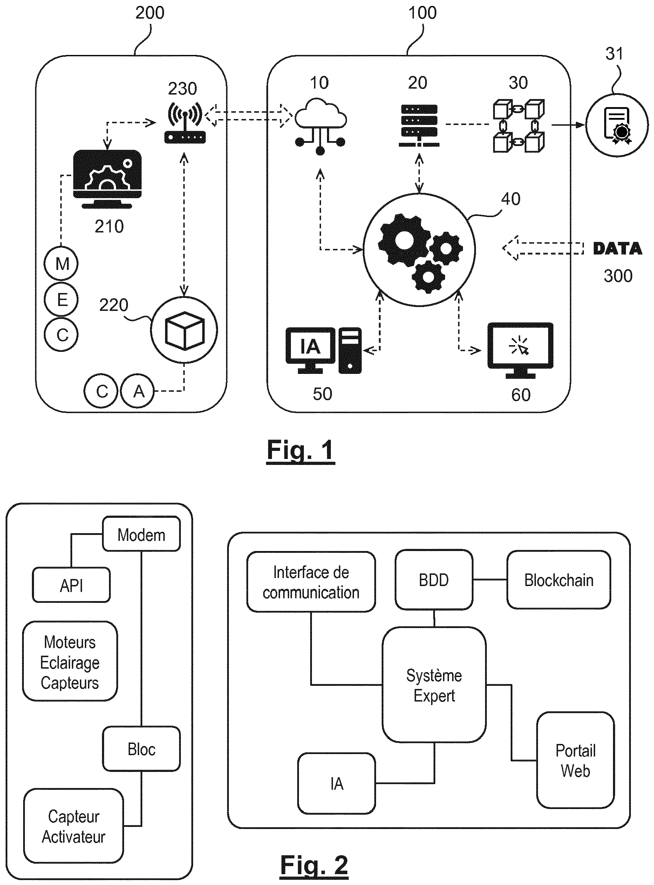

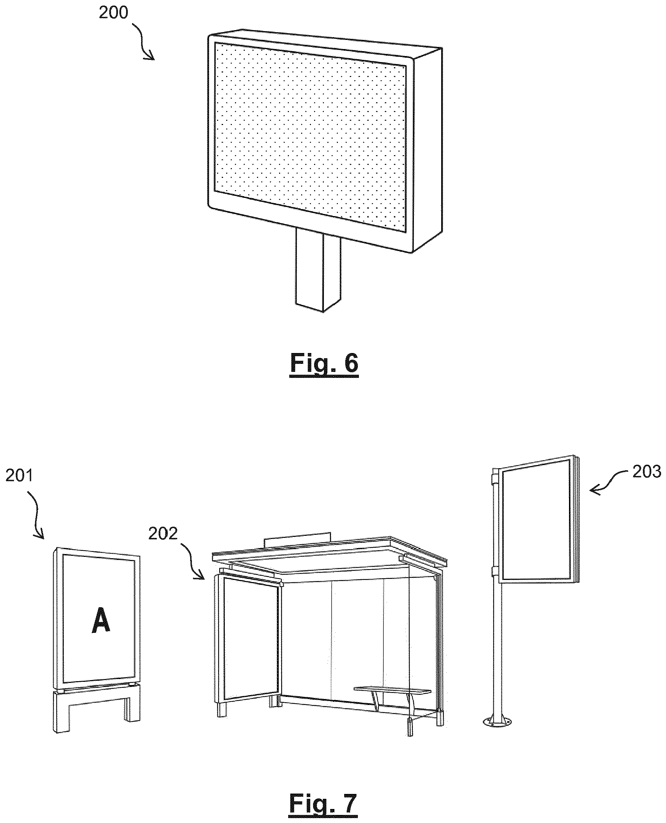

La figure 6 représente un panneau déroulant 200, tel qu'on en trouve en bord de route ou dans les parkings, comportant principalement un caisson, généralement métallique, une fenêtre ou deux fenêtres d'affichage transparentes, le plus souvent reliée de façon articulée au caisson pour permettre l'accès à une bande porteuse d'affiches ou à un train d'affiches, et un support. La bande porteuse est montée sur des rouleaux motorisés actionnés par des moteurs de technologies diverses, asynchrones ou sans balais par exemple. Outre, les moteurs électriques et l'unité centrale, le panneau déroulant peut comporter différents capteurs et composants électroniques tels que des dispositifs d'éclairage. De plus, en référence aux figures 1 et 2, le panneau déroulant comporte un automate programmable industriel 210, désigné par API dans la suite, pour contrôler et commander les moteurs électriques, récolter les données issues des capteurs, commander les dispositifs d'éclairage et les éventuels autres composants électroniques présents dans le panneau déroulant.

De façon optionnelle, le panneau déroulant 200 comporte un ou plusieurs blocs de commande 220 recevant des données en entrée à partir de capteurs complémentaires tels que des capteurs de température, d'hygrométrie, de géolocalisation, d'image, de pollution, etc., et délivrant des consignes en sortie pour gérer le fonctionnement d'activateurs tels que des dispositifs de ventilation et de chauffage, des gradateurs et d'autres dispositifs de régulation.

Les capteurs du panneau déroulant peuvent être « intelligents » et intégrer à cet effet une solution logiciel leur permettant de communiquer les données de mesure à des modules de récupération de données, lesdits modules intégrant également des unités de traitement de l'information, comportant des convertisseurs et un traitement numérique du signal par exemple, des interfaces de communication et des mémoires informatiques adaptées.

Au sein du panneau déroulant 200, l'API 210 et le bloc de commande 220 sont reliés à un périphérique de communication de type modem 230 pour un échange de données avec un terminal distant, de sorte que le modem puisse envoyer régulièrement des données de contrôle, telles que des mesures fournies par des capteurs, des données de fonctionnement et des alertes en cas de dysfonctionnement, et recevoir en contrepartie des consignes de fonctionnement des activateurs connectés à l'API ou au(x) bloc(s) optionnel(s).

Cette communication entre le modem du panneau déroulant et le terminal distant peut être opérée via un réseau de communication sans-fil selon un protocole donné de type GSM, Lora, Sigfox, etc.

Il n'est pas sans savoir que l'architecture électronique et informatique ci-dessus décrite est donnée comme exemple, et que le panneau déroulant peut présenter une architecture alternative connue de l'homme du métier et parfaitement adaptée à la mise en oeuvre de l'invention.

L'objet de la présente invention concerne, en partie, un système de gestion optimisée 100 communicant avec un panneau déroulant 200 tel que venant d'être décrit, en vue d'organiser et d'optimiser son fonctionnement propre de manière isolée, ou son fonctionnement en cohérence avec d'autres panneaux sous forme de cohorte ou de groupe de panneaux, comme pour organiser le fonctionnement pour tous les panneaux déroulants d'une ville dans le cadre du respect des règles environnementales par exemple, et d'organiser sa maintenance de façon optimisée et prédictive pour minimiser la durée d'indisponibilité d'un panneau déroulant par exemple.

Le système de gestion optimisée 100, selon l'exemple illustré sur les figures 1 et 2, comprend principalement une interface de communication 10, une base de données 20, une blockchain 30, un système expert 40, une intelligence artificielle 50 et une interface utilisateur 60.

Dans la présente description, l'expression « intelligence artificielle » désigne par extension tout dispositif de type calculateur implémentant des algorithmes d'intelligence artificielle, et le terme « blockchain » désigne la technologie de chaine de blocs selon un usage commun très répandu.

L'interface de communication 10 permet de faire le lien et assure l'interaction entre le modem 230 du panneau déroulant 200 et le système expert 40, en décodant les informations provenant dudit modem avant leur transmission au système expert et en codant les informations issues dudit système expert avant leur transmission au modem.

La base de données 20 permet de stocker et de classer, exclusivement, les données collectées par le système expert 40 selon leurs natures et leurs consistances.

La blockchain 30 est une solution logiciel autonome communicant avec le serveur de base de données 20 et effectuant régulièrement les calculs nécessaires pour assurer la traçabilité et l'intégrité du contenu de la base de données 20, et par là-même la sécurisation par cryptage de cette dernière. Ces calculs permettent de générer des certificats 31, contenant en particulier sous forme cryptée des horodatages et la signature des certificats précédents, qui seront ensuite envoyés à l'utilisateur par email par exemple.

Le système expert 40 est un ensemble de programmes informatiques implémentables par logiciel dans une unité de traitement, de type processeur, calculateur ou serveur, et permet de communiquer avec l'interface de communication 10, la base de données 20, l'interface utilisateur 60, la réception de données utilisateurs et tiers 300, et l'intelligence artificielle 50, afin de réaliser, par une mise en cache, tous les calculs complexes et chronophages nécessaires au fonctionnement des éléments précités, d'analyser ledit fonctionnement, de calculer des règles d'optimisation et de régler les flux de communication avec l'interface de communication 10, la base de données 20 et l'interface utilisateur 60.

L'intelligence artificielle 50 comprend une solution logicielle et communique avec le système expert 40 afin d'effectuer une analyse prédictive à partir des données collectées par ledit système expert, notamment pour une maintenance prédictive du panneau déroulant 200. Une fois l'analyse et les calculs effectués, l'intelligence artificielle 50 communique les résultats et l'ensemble des recommandations au système expert 40 qui se charge de les mettre en forme avant de les transmettre à l'interface utilisateur 60.

L'interface utilisateur 60 comprend une solution logicielle permettant d'afficher les informations utiles, issues des différents traitements effectués dans le système de gestion optimisée 100, pour que l'utilisateur puisse les exploiter dans sa prise de décision relativement à une éventuelle intervention pour maintenance ou à un réglage nécessaire, ou simplement à titre informatif. L'interface utilisateur 60 se présente préférablement sous forme d'un portail web sécurisé accessible depuis un poste fixe ou mobile sous quelque forme que ce soit (ordinateur, smartphone, tablette, etc.).

L'interface utilisateur 60 permet également une visualisation en réalité augmentée présentée plus loin dans la description.

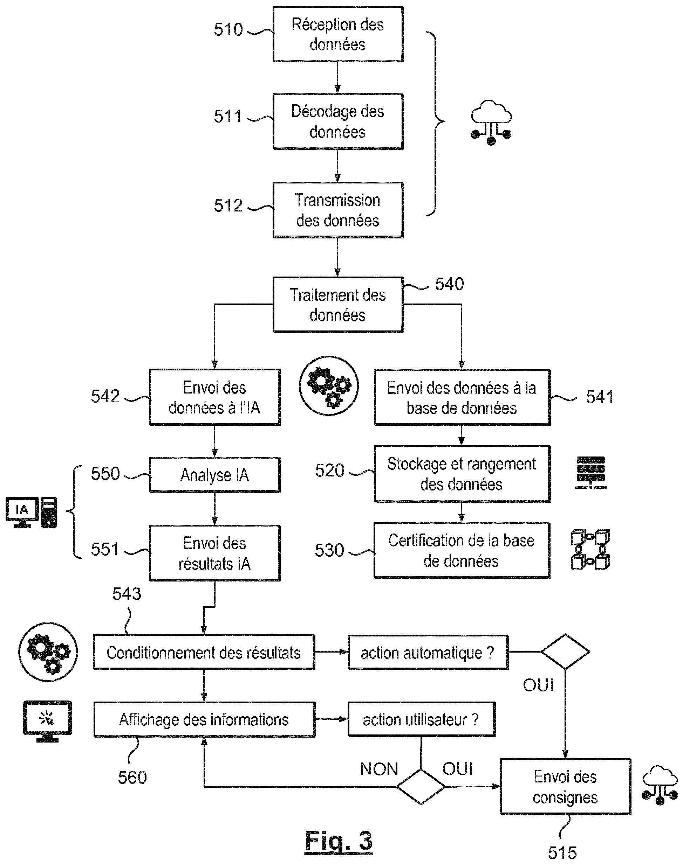

La figure 3 représente les étapes d'un procédé de gestion optimisée du fonctionnement et de maintenance d'un panneau déroulant, ledit procédé comprenant de façon générale :
- une étape 510 de réception de données issues du panneau déroulant 200 par l'interface de communication 10 du système de gestion optimisée 100 ;
- une étape 511 de décodage desdites données dans l'interface de communication 10 ;
- une étape 512 de transmission des données décodées au système expert 40 ;
- une étape 540 de traitement des données reçues dans le système expert 40 ;
- une étape 541 d'envoi des données traitées à la base de données 20 ;
- une étape 520 de stockage et de rangement des données reçues ;
- une étape 530 de certification par la blockchain 30 du contenu de la base de données 20 et d'envoi de certificats 31 à l'utilisateur ;
- une étape 542 d'envoi des données traitées à l'intelligence artificielle 50 ;
- une étape 550 d'analyse et de traitement des données par l'intelligence artificielle 50 ;
- une étape 551 de communication des résultats d'analyse et de traitement au système expert 40 ;
- une étape 543 de conditionnement desdits résultats par le système expert 40 ;
- une étape 560 d'affichage des résultats conditionnés par l'interface utilisateur 60 ; et éventuellement
- une étape 515 d'envoi de consignes par le système de gestion optimisée 100 au panneau déroulant 200.

Il est ici fondamental de préciser que les étapes précitées ne sont ni exhaustives ni données dans un ordre chronologique d'exécution, de même que les références numériques desdites étapes n'indiquent pas leur ordre d'exécution.

L'étape 510 de réception des données permet à l'interface de communication 10, qui représente l'entrée du système de gestion optimisée 100, de récupérer des données issues des différents composants (capteurs, moteurs, éclairage, activateurs) du panneau déroulant 200 et envoyées par le modem 230 sur un réseau de communication sans-fil tel qu'un réseau GSM.

L'étape 511 de décodage des données consiste en une succession de traitements numériques des données brutes reçues par l'interface de communication 10 de sorte à les rendre exploitables par le système expert 40.

L'étape 512 de transmission des données consiste à acheminer les données décodées par l'interface de communication 10 vers le système expert 40.

L'étape 540 de traitement des données consiste à nettoyer, agréger et mettre en forme les données sous un format compatible avec le modèle d'intelligence artificielle retenue.

L'étape 541 d'envoi des données traitées à la base de données 20 consiste à déplacer l'ensemble des données reçues sur la base de données 20. Ainsi, le système expert 40 peut ne garder qu'une copie temporaire des données sur une mémoire vive permettant l'exécution des programmes d'intelligence artificielle par exemple.

L'étape 520 de stockage et de rangement des données dans la base de données 20 se déroule, de façon traditionnelle, comme il est d'usage dans les bases de données.

L'étape 515 d'envoi de consignes correspond à l'envoi par le système de gestion optimisée 100 de consignes de fonctionnement au panneau déroulant 200 en fonction de l'analyse de données faite par le système expert 40 et/ou par l'intelligence artificielle 50. L'envoi des consignes est effectué soit de manière automatique, auquel cas le système expert 40, ayant détecté une anomalie, envoie une consigne selon un programme de réglage et de contrôle adaptatif implémenté dans ledit système expert, soit de manière manuelle par une action volontaire de l'utilisateur après consultation des informations affichées.

L'intelligence artificielle peut également effectuer un apprentissage à partir des différentes décisions prises par l'utilisateur afin d'automatiser au maximum l'envoi des consignes et de limiter ainsi l'action humaine aux seuls cas de maintenance nécessitant une intervention physique (panne, dégradation, remplacement de pièce, etc.).

L'intelligence artificielle peut également effectuer un apprentissage à partir des données issues d'un panneau ou d'un groupe de panneau, comme ceux d'une même ville par exemple, afin d'effectuer des prédictions et des recommandations d'optimisation et/ou de fonctionnement pour un autre panneau ou un autre groupe de panneaux, ceux d'une autre ville par exemple.

Lorsque l'envoi des consignes est manuel, il peut être effectué en temps différé. Les envois automatiques de consignes sont, quant à eux, effectués en temps réel systématiquement.

L'envoi de consignes lors de l'étape 515 est effectué au moyen de l'interface de communication 10 avec, bien évidemment, un codage préalable du signal avant l'envoi au modem 230 du panneau déroulant 200. Le modem transmet ensuite les consignes reçues à l'API 210 qui se charge de les exécuter au niveau des composants du panneau déroulant 200.

Les consignes envoyées permettent ainsi d'optimiser en temps réel le fonctionnement du panneau déroulant 200 au vu de plusieurs paramètres de contrôle. Par exemple, le système de gestion optimisée 100 permet avantageusement de :
- Prolonger la durée de vie des réducteurs du panneau déroulant, en compensant les vitesses de défilement des affiches publicitaires en fonction du poids du support utilisé (grammage du papier par exemple), du nombre d'affiches et de l'usure des engrenages des réducteurs. Cette compensation peut être réalisée au niveau des vitesses de rotation et/ou des accélérations des moteurs.
- Régler la synchronisation des défilements dans le cas d'un affichage côte à côte d'affiches pour un groupe de panneaux déroulants.
- Améliorer la qualité d'exposition des affiches, les affiches devant être tendues entre les rouleaux du panneau déroulant et présenter une tension suffisante et sensiblement constante sur plusieurs jours, voire plusieurs semaines, selon la durée de la publicité. À cet effet, le système de gestion optimisée détermine les rotations nécessaires des moteurs entrainant les rouleaux pour obtenir le couple adapté sans déchirer les affiches.
- Evaluer l'état de chaque composant électronique (moteur, API, capteur, éclairage, ...) du panneau déroulant, notamment grâce à une analyse en temps réel des températures d'utilisation dudit composant.
- Localiser la panne dans le panneau déroulant et déterminer sa nature pour une action ciblée et efficace. De plus, un paramètre de criticité de la panne peut être utilisé pour classer les interventions nécessaires selon une priorité liée à l'emplacement et à la visibilité des panneaux avariés. De plus, un paramètre de criticité du panneau déroulant peut être utilisé pour classer les interventions nécessaires selon une priorité liée à la rentabilité des panneaux avariés. Par exemple, l'intervention sur un panneau en panne dans un centre commercial à une heure de grande affluence présente plus d'urgence qu'une intervention de nuit sur un panneau isolé installé dans un parking.
- Calibrer les différents capteurs du panneau déroulant pour un fonctionnement optimisé, l'intelligence artificielle reconnaissant la configuration de chaque capteur et l'état fonctionnel de chaque activateur.
- Déclencher en temps réel les procédures d'intervention et de maintenance.
- Calculer des parcours optimisés lors des opérations de maintenance pour limiter la perte de temps, et établir un séquencement précis des opérations à réaliser.
- Actionner les activateurs de ventilation et de chauffage pour réguler la température et assécher l'humidité dans le panneau, préservant ainsi le support des affiches et les composants électroniques. Par exemple, le papier a tendance à coller à la vitre du panneau sous l'effet de l'humidité. Un traitement antibuée peut également être effectué par les activateurs et l'état fonctionnel de chaque activateur.
- Contrôler l'éclairage dans le panneau déroulant suivant différentes situations. Par exemple, l'éclairage est éteint en cas de panne pour ne pas attirer le regard des usagers.

Les étapes 541 d'envoi des données à l'intelligence artificielle et 542 d'envoi des données à la base de données peuvent être réalisées parallèlement ou séquentiellement, dans un ordre quelconque, par le système expert 40 du système de gestion optimisée 10.

L'étape 530 de certification de la base de données 20 par la blockchain 30 peut être réalisée à chaque nouveau stockage de données dans ladite base de données ou de façon périodique à une fréquence déterminée. Cette opération peut s'avérer très utile dans le cadre d'un litige entre le propriétaire du panneau déroulant et l'annonceur afin de prouver que la base de données contient des informations utiles qui n'ont pas pu être modifiées pour les besoins de la cause, certifiant ainsi la réalité du fonctionnement ou du disfonctionnement des panneaux déroulants.

L'étape 550 d'analyse des données par l'intelligence artificielle 50 peut éventuellement comprendre des calculs effectués en cache dans le système expert 40 afin de réduire le temps de calcul nécessaire. À cet effet, le système expert 40 peut également être apte à exécuter des calculs en parallèle sur une pluralité de serveurs et présenter ainsi une puissance de calcul améliorée.

L'étape 560 d'affichage des informations permet à l'utilisateur de disposer d'un outil de gestion intuitif sous forme d'application installée sur une tablette ou un smartphone par exemple ou sous forme d'une interface de réalité augmentée.

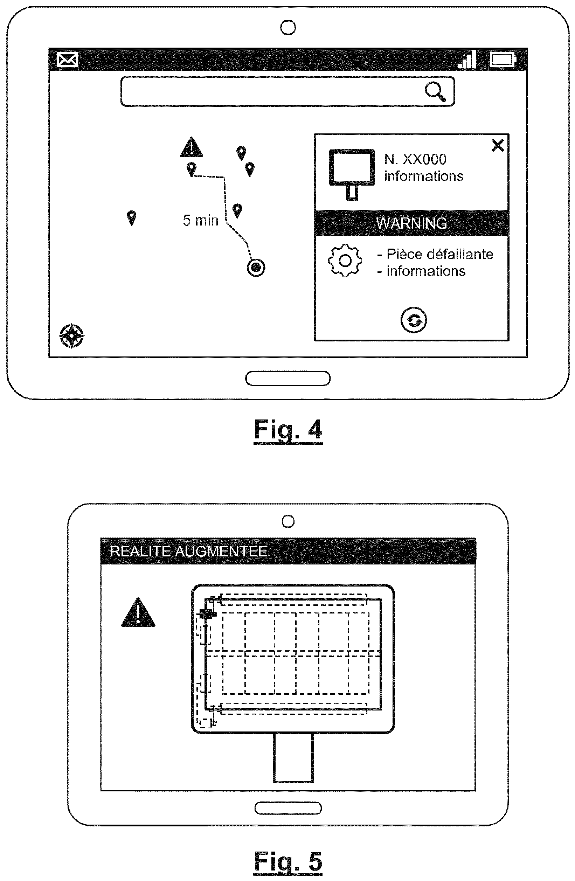

Les figures 4 et 5 illustrent deux exemples d'affichages des informations, respectivement, via une application dédiée utilisant une géolocalisation des panneaux et offrant un calcul de parcours avec les informations nécessaires à la préparation de l'intervention, et via une interface de réalité virtuelle avec tous les avantages permis par cette technologie.

De façon complémentaire, le système de gestion optimisée 100 est apte à recevoir directement sur le système expert 40 des données client ou des données tiers 300, tel que représenté sur la figure 1, par une voie indépendante telle qu'une liaison internet dédiée. Ces données serviront à alimenter l'intelligence artificielle 40 de la même manière que les données issues du panneau déroulant 200.

Ainsi, le flux d'informations reçu peut rapidement devenir important et des algorithmes spécifiques de traitement des données, de type big data, peuvent être implémentés dans le système de gestion optimisée, et plus particulièrement dans le système expert 40.

Compte tenu de l'invention, il apparait clairement que des modifications mineures peuvent être appliquées au système de gestion optimisée 100 et des étapes du procédé de gestion correspondant peuvent être réalisées différemment sans pour autant sortir du cadre de l'invention.

## Revendications

1. Système de gestion (100) du fonctionnement et de la maintenance d'une pluralité de dispositifs électroniques (200, 201, 202, 203) installés dans un espace public, comprenant une interface de communication (10), apte à recevoir des données issues des dispositifs électroniques, un serveur de base de données (20), une unité centrale de traitement et de calcul (40) et une interface utilisateur (60), **caractérisé en ce que** ledit système comporte des moyens de mise en oeuvre d'une intelligence artificielle (50) opérant une analyse prédictive sur les données issues desdits dispositifs électroniques et organisant des résultats de ladite analyse pour leur affichage via l'interface utilisateur.

2. Système de gestion selon la revendication 1, dans lequel le serveur de base de données (20) est sécurisé par une chaine de blocs, ou blockchain, (30) effectuant des certifications du contenu dudit serveur de base de données et générant des certificats (31) correspondants.

3. Système de gestion selon la revendication 1 ou la revendication 2, **caractérisé en ce qu'**il est apte à recevoir des données externes (300) envoyées par un client ou un tiers, directement sur l'unité centrale de traitement et de calcul (40).

4. Système de gestion selon l'une quelconque des revendications précédentes, dans lequel l'interface de communication (10) est apte à communiquer sur un réseau sans-fil de type GSM.

5. Système de gestion selon l'une quelconque des revendications précédentes, dans lequel l'interface utilisateur (60) se présente sous forme d'une solution ou d'une combinaison de solutions parmi un portail web, une application installée sur une tablette ou un téléphone mobile, et une interface de réalité augmentée installée sur une tablette ou un téléphone mobile.

6. Procédé de gestion du fonctionnement et de la maintenance d'une pluralité de dispositifs électroniques (200, 201, 202, 203) installés dans un espace public, mettant en oeuvre un système de gestion (100) selon l'une des revendications 1 à 5, comprenant :
- une étape (510) de réception de données, issues d'au moins un dispositif électronique, par l'interface de communication (10) ;
- une étape (512) de transmission des données reçues à l'unité centrale de traitement et de calcul (40) ;
- une étape (520) de stockage desdites données dans le serveur de base de données (20) ;
- une étape (550) d'analyse desdites données par l'intelligence artificielle (50) ; et
- une étape (560) d'affichage des résultats de ladite analyse sur l'interface utilisateur (60).

7. Procédé de gestion selon la revendication 6, comprenant en outre :
- une étape (511) de décodage de données par l'interface de communication (10) avant leur transmission à l'unité centrale de traitement et de calcul ;
- une étape (540) de traitement de données dans ladite unité centrale avant leur stockage dans le serveur de base de données (20) et leur analyse par l'intelligence artificielle (50) ; et
- une étape (530) de certification du contenu de la base de données par une blockchain (30).

8. Procédé de gestion selon la revendication 6 ou la revendication 7, comprenant en outre une étape (515) d'envoi de consignes de fonctionnement par le système de gestion optimisée (100) à au moins un dispositif électronique.

9. Procédé de gestion selon la revendication 8, dans lequel l'envoi de consignes est automatique, lesdites consignes étant déterminées par l'intelligence artificielle (50) et/ou l'unité centrale de traitement et de calcul (40).

10. Procédé de gestion selon la revendication 8, dans lequel l'envoi de consignes est manuel, lesdites consignes étant déterminées par l'utilisateur après consultation des résultats affichées sur l'interface utilisateur (60).

11. Procédé de gestion selon l'une quelconque des revendications 6 à 10, dans lequel au moins un dispositif électronique est un panneau d'affichage déroulant (200, 201, 202, 203).
